# EUROPEAN PATENT SPECIFICATION

(11) **EP 1 717 170 B1**
(45) Date of publication and mention of the grant of the patent: **21.05.2008**
(21) Application number: 06112685.0
(22) Date of filing: 18.04.2006
(51) Int. Cl.: B65G 47/08, B65B 35/40, B65B 35/44

(54) **Machine for the treatment of batches of objects**
Maschine zum Zusammenstellen von Gegenstandsgruppen
Machine pour la constitution de lots d'articles

(30) Priority: 29.04.2005 IT MI20050777
(43) Date of publication of application: 02.11.2006
(73) Proprietor: OCME S.r.l., 43100 Parma (IT)
(72) Inventor: Gatteschi, Emanuele, 43100 Parma (IT)
(74) Representative: De Gregori, Antonella

(56) References cited:
- FR-A- 2 750 122
- GB-A- 941 490
- US-A- 2 681 171
- US-A- 3 708 947
- US-A- 5 133 446

## Description

The present invention refers to a machine for the treatment of batches of objects.

An example of a machine for the treatment of batches of objects is disclosed in US-A-5,133,446.

In order to package objects, such as packs of rolls of toilet paper and/or kitchen roll packaged according to various configurations, or other objects on pallets, they are grouped in batches, which contribute to forming a layer of a pallet in formation.

This takes place in a known way in so-called robotized palletisation cells or stations, through one or more manipulators provided with pincers for the transfer of the batches.

Layers that are stable when piled on top of one another are generally formed from batches of different configuration, for example containing a variable number of objects. Moreover, the batches are arranged within the layer according to programmable configurations.

The purpose of the present invention is to make a machine for the treatment of batches of objects that carries out the separation, formation and transfer of batches of objects.

Another purpose of the present invention is to make a machine for the treatment of batches of objects working continuously with high performance.

Another purpose of the present invention is to make a machine for the treatment of batches of objects that is particularly simple and functional, with low costs.

These purposes according to the present invention are accomplished by making a machine for the treatment of batches of objects as outlined in claim 1.

Further characteristics are foreseen in the dependent claims.

The characteristics and advantages of a machine for the treatment of batches of objects according to the present invention shall become clearer from the following description, given as an example and not for limiting purposes, referring to the attached schematic drawings, in which:
Figures 1 and 2 are schematic plan views of a machine for the treatment of batches of objects according to the present invention, shown in two successive steps;
Figure 3 is a schematic top side view of the machine for the treatment of batches of objects according to the present invention;
Figure 4 schematically shows the machine object of the present invention from a front side.

With reference to the figures, a machine for the treatment of batches of objects is shown, wholly indicated with 10, comprising feeding means 20 of objects 11, a selection group 30 of a row 12 of objects, a formation plane 40 of a batch 13, a transfer device 50 of the formed batch 13 and at least one evacuation line 60 thereof towards palletisation cells, not shown.

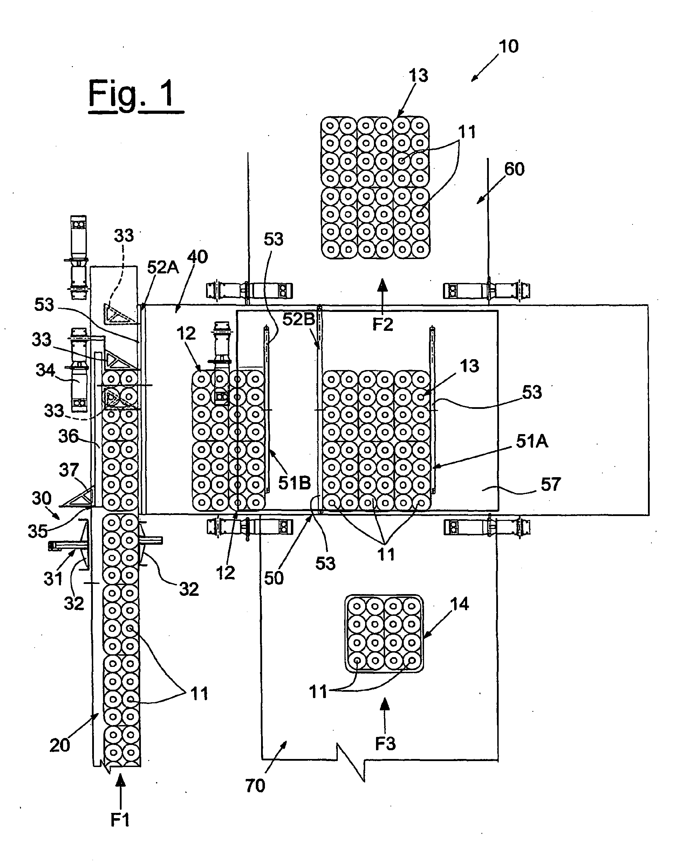

The feeding means 20 of objects consist, for example, of a conveyor belt on which the objects 11, or rather the packages, continually advance in the direction indicated in figure 1 with the arrow F1, arranged individually or side-by-side.

At one end of the conveyor belt 20 the selection group 30 of a row 12 of objects is arranged, which comprises a pressing device 31, able to interrupt or slow down the feeding of the objects 11, a mobile counteraction element 33 of the row 12 in formation, and a separator device 35 with programmed variable stroke that selects the objects in variable quantity to form at least one row on a formation plane 40 of a batch, which is fixed.

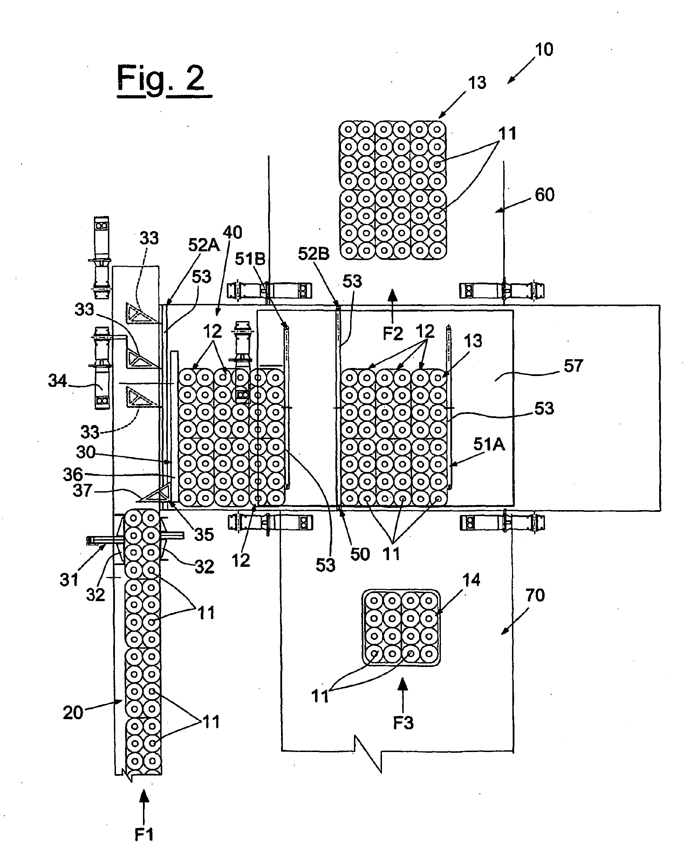

The separator device 35 comprises a thrusting plane 36 for moving the selected objects 11, or rather the row 12 in a direction perpendicular to the conveyor belt 20. The thrusting plane 36 is equipped with a work stroke and a return stroke and is schematically shown in figures 1 and 2 respectively in withdrawn rest position and in advanced thrusting position on the row 12 of objects.

A stop element 37, which prevents a new package 11 advancing during the work stroke of the thrusting plane 36, is fixedly connected perpendicularly on the rear side of the thrusting plane 36 at an end thereof.

The mobile counteraction element 33, controlled by a motor 34, can be moved in a programmable way for the formation of each row 12, in any position along the conveyor belt 20, to obtain rows 12 of objects, comprising a variable number of objects 11, for example from 1 to 10.

Figures 1 and 2 schematically show with a dotted and dashed line two different positions that can be taken up by the counteraction element 33 for the formation of rows 12 respectively comprising a greater or smaller number of objects 11.

The pressing device 31 comprises a motorised pincer arranged upstream of the thrusting plane 36 for clamping a package 11 being fed on opposite sides.

Figures 1 and 2 show the pressing device 31 respectively with jaws 32 in open release position, and with jaws 32 in closed clamping position.

The pressing device 31 is programmable so as to collaborate with the separator device 35 and with the counteraction element 33 in order to remove the pressure of the objects 11 arranged upstream and always kept fed through an electronic minimum product level control.

Moreover, the pressing device 31 can intervene in emergency conditions to interrupt the feeding of the objects 11 to the separator device 35 in the case of extraordinary interventions on the machine 10.

During normal operation, when a photocell, not shown, identifies the desired number of packages 11 that, according to the specific programme, constitute a row 12, the pressing device 31 clasps the first package 11 after those forming the desired row 12 (figure 1). Then the work stroke of the separator device 35 is started, which transfers the row 12 onto the formation plane of the batch 40 (figure 2).

Before the return stroke of the separator device 35 has completely ended, the pressing device 31 anticipates the opening to recover the waiting time that would be connected to the inertia of the software control and of the pneumatic and mechanical actuations. The presence of the stop 37 perpendicular to the thrusting plane 36 of the separator device 35 in any case prevents the package 11 released by the pressing device 31 from accidentally inserting at the shoulders of the thrusting plane 36.

The selection group 30 is managed by a control system and forms a batch 13 on the formation plane 40, in which the batch 13 comprises a number of rows 12 of objects and a number of objects 11 for each row 12 that is variable by a programme.

The transfer device 50 of the batches 13 from the formation plane 40 to the evacuation line 60 towards the palletisation cell comprises evacuation means 57, i.e. an evacuation conveyor, arranged downstream of the formation plane 40 of batches 13 and a plurality of thrusters, top 51A and 51B and bottom 52A and 52B, made up of a shaft 53 arranged transversally with respect to the formation plane 40, fixed through supports 54 to a pair of chains.

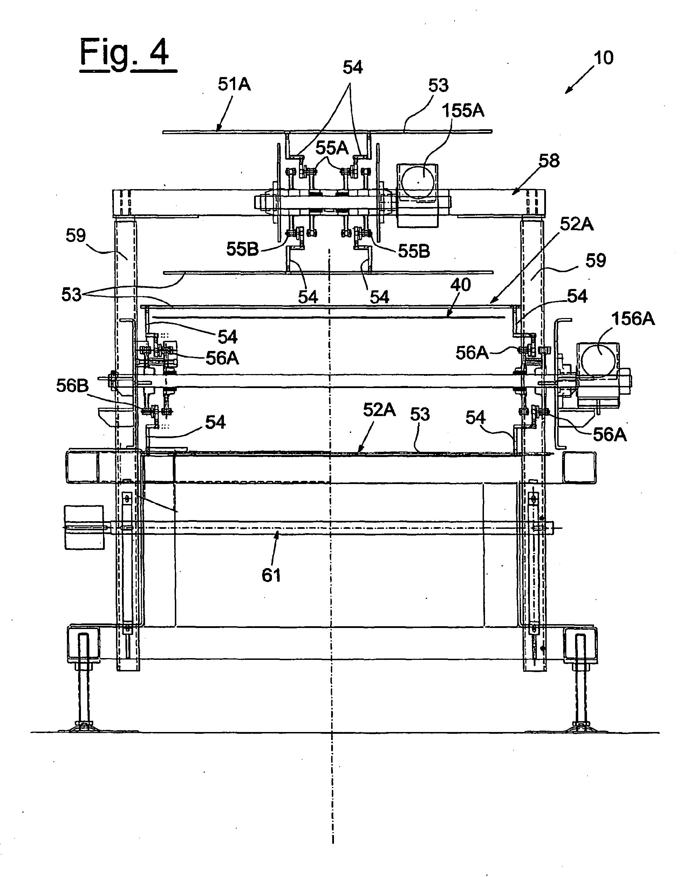

As shown in the side view of figure 4, the transfer device comprises two pairs of top chains 55A and 55B and two pairs of bottom chains 56A and 56B, in which each pair of chains is actuated by its own motor 155A, 155B, 156A, 156B in an independent and programmable manner.

The two pairs of bottom chains are arranged at the side of the evacuation conveyor 57, so that the two chains forming each pair 56A and 56B are on opposite sides with respect to the evacuation conveyor 57.

The two pairs of top chains 55A and 55B, on the other hand, are housed on a structure 58 arranged above the evacuation conveyor 57 and height-adjustable according to the height of the packages 11.

The structure is supported by four telescopic side uprights 59 that are height-adjustable through an actuation 61 (shown schematically) of the known type that transmits the movement to all of the uprights 59.

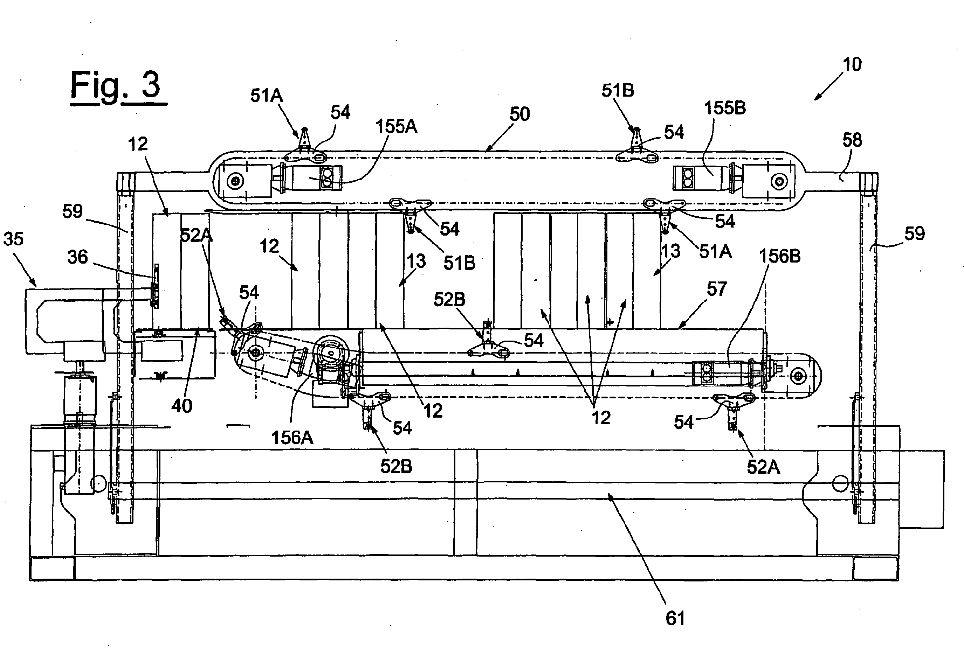

According to what is shown in figure 3, in a preferred embodiment, on each pair of chains 55A, 55B and 56A, 56B two thrusters 51A, 51B and 52A, 52B are arranged, for example suitably spaced to allow intervention on four consecutive batches 13.

The supports 54 of the thrusters, as shown in figure 4, can be connected alternatively on interfacing sides of the contiguous chains.

As an example, figure 4 shows, at the edge of the structure 58, the thruster 51A fixed to the pair of inner chains 55A that is located on the top branch of the chains and the thruster 51B fixed to the pair of outer chains 55B that is located on the bottom branch of the chains.

Similarly, the thruster 52A is connected on the top branch of the pair of inner bottom chains 56A and the thruster 52B is shown on the bottom branch of the pair of outer chains 56B.

As schematically shown in figure 3, the motorised bottom thruster thrusts the batch 13 onto the evacuation conveyor 57 and the top thruster, having an independent motorisation, holds it on the opposite side to prevent the accidental toppling of the packages 11.

The starting of the evacuation conveyor 57 according to a direction perpendicular to the advancing direction of the batches by means of the transfer device 50, schematised in figures 1 and 2 with the arrow F2, discharges the batches 13 on the next evacuation line 60 towards the palletisation cell, not shown.

During the summation of the times for the transfer of the batch 13 onto the conveyor 57 and for the evacuation thereof another pair of bottom and top thrusters is positioned in order to form a new batch of packages on the formation plane 40, as schematised in figure 1, without ever interrupting the function of the selection group 30 that forms the rows 12.

The presence, in the embodiment shown in the figures, of four top thrusters and four bottom thrusters, in which thrusters suitable for coming into contact with the batches in succession are mounted on different pairs of independently motorised chains allows successive batches of whatever size to be moved independently from each other.

The position of the batch transferred onto the evacuation conveyor with respect to an axis of the latter is continuously variable and programmable according to the optimisation of the successive operations.

The apparatus according to the present invention can also be equipped with a secondary feeding means 70, for example a motorised conveyor, which feeds products, such as individual packages 11, rows 12, batches 13 or so-called sacks 14 towards the transfer device 50 in the direction of the arrow F3 on the opposite side with respect to the evacuation line 60.

Indeed, in the field of packaging of rolls of kitchen towel, the individual packages can then be packaged in a machine for putting them in a sack, according to different configurations.

In this case bottom and top transfer thrusters can also be used as positioners of objects coming from the secondary conveyor according to the subsequent operations.

Moreover, in a further embodiment of the apparatus according to the present invention, not shown, a second evacuation conveyor and possibly a second secondary conveyor are arranged next to the first. In this embodiment the transfer conveyor has a greater length, substantially equal to the width of the pairs of evacuation and secondary conveyors.

The machine for the treatment of batches of objects according to the present invention has the advantage of having substantially continuous operation, in particular in terms of the feeding of the packages and the formation of batches.

Moreover, the machine advantageously allows batches of variable size, like number of rows and number of objects per row, to be continuously formed.

The machine for the treatment of batches of objects thus conceived can undergo numerous modifications and variations, all of which are covered by the invention; moreover, all of the details can be replaced by technically equivalent elements. In practice, the materials used, as well as the sizes, can be whatever according to the technical requirements.

## Claims

1. Machine for the treatment of batches of objects comprising feeding means (20) of objects (11), a selection group (30) of at least one row (12) of objects, acting in a direction perpendicular to a feeding direction of said objects (11), and at least one evacuation line (60) of formed batches, comprising a fixed formation plane (40) of a batch (13) arranged downstream of said selection group (30) and a transfer device (50) of the formed batch from said formation plane (40) towards said at least one evacuation line (60), in which said selector group (30) comprises a separator device (35) with variable and programmed stroke for the selection of a variable quantity of objects (11) fed continuously to form said at least one row (12) on said formation plane (40), **characterized in that** said selection group (30) further comprises a counteraction element (33) of the row in formation that is mobile along said feeding means (20) and **in that** said transfer device (50) of the batch (13) from said formation plane (40) towards said at least one evacuation line (60) comprises a plurality of top thrusters (51A, 51B) and of bottom rollers (52A, 52B), each made up of a shaft (53) arranged transversally with respect to the formation plane (40), fixed through supports (51) respectively to pairs of top chains (55A, 55B) and pairs of bottom chains (56A, 56B).

2. Machine according to claim 1, **characterised in that** said separator device (35) comprises a thrusting plane (36) for the transfer of the selected objects (11) in a direction perpendicular to said feeding means (20), in which said thrusting plane (36) is equipped with a work stroke and a return stroke.

3. Machine according to claim 2, **characterised in that** said separator device (35) comprises a stop element (37) perpendicular to said thrusting plane (36) fixedly connected on the rear side of said thrusting plane (36).

4. Machine according to claim 1, **characterised in that** said mobile counteraction element (33) is controlled by a motor (34) continuously along a conveyor belt of said feeding means (20).

5. Machine according to claim 1, **characterised in that** said selection group (30) comprises a pressing device (31) with pincers arranged upstream of said separator device (35), suitable for interrupting or slowing down the feeding of the objects (11).

6. Machine according to claim 5, **characterised in that** said selection group (30) is managed by a control system that, once the feeding of a predetermined number of objects (11) forming a row (12) has been achieved, controls the actuation of said pressing device (31) and the work stroke of said separator device (35) and anticipates the opening of said pressing device (31) with respect to the return stroke of said separator device (35).

7. Machine according to claim 1, **characterised in that** said transfer device (50) comprises two pairs of top chains (55A, 55B) and two pairs of bottom chains (56A, 56B), in which each pair of chains is actuated by its own motor (155A, 155B, 156A, 156B) independently and programmably.

8. Machine according to claim 7, **characterised in that** each pair of chains (55A, 55B, 56A, 56B) is equipped with two thrusters (51A, 51B, 52A, 52B).

9. Machine according to claim 7, **characterised in that** said two pairs of bottom chains (56A, 56B) are arranged beside an evacuation conveyor (57), said two chains forming each pair (56A, 56B) being on opposite sides with respect to said evacuation conveyor (57), and **in that** said two pairs of top chains (55A, 55B) are housed on a structure (58) arranged above the evacuation conveyor (57) and height-adjustable according to the height of the packages.

10. Machine according to claim 9, **characterised in that** said structure (58) is supported by four height-adjustable telescopic side uprights (59).

11. Machine according to claim 1, **characterised in that** said supports (54) can be alternatively connected on opposite sides of said chains (55, 56).

12. Machine according to claim 1, **characterised in that** it comprises a secondary feeding means (70) for feeding products (11, 12, 13, 14) to said transfer device (50) on the opposite side to said evacuation line (60).

## Patentansprüche

1. Maschine zur Behandlung von Stapeln von Objekten, die Einspeisungsmittel (20) für Objekte (11) aufweist, eine Auswahlgruppe (30) für mindestens eine Reihe (12) von Objekten, die in einer Richtung senkrecht zu einer Einspeisungsrichtung der Objekte (11) wirkt, und mindestens eine Ableitungslinie (60) für geformte Stapel, die eine feste Formgebungsebene (40) für einen Stapel (13) aufweist, und zwar stromabwärts der Auswahlgruppe (30) angeordnet, und eine Transfervorrichtung (50) für den geformten Stapel von der Formgebungsebene (40) zu der mindestens einen Ableitungslinie (60), wobei die Auswahlgruppe (30) eine Trennvorrichtung (35) mit variablem und programmiertem Hub für die Auswahl einer variablen Menge von Objekten (11) aufweist, die kontinuierlich eingespeist werden, um die mindestens eine Reihe (12) auf der Formgebungsebene (40) zu formen, **dadurch gekennzeichnet, dass** die Auswahlgruppe (30) weiter ein Gegenwirkungselement (33) für die gerade gebildete Reihe aufweist, welches entlang der Einspeisungsmittel (20) bewegbar ist, und **dadurch dass** die Transfervorrichtung (50) für den Stapel (13) von der Formgebungsebene (40) zu der mindestens einen Ableitungslinie (60) eine Vielzahl von oberen Schiebern (51A, 51B) und von unteren Rollen (52A, 52B) aufweist, die jeweils aus einer Welle (53) aufgebaut sind, die quer bezüglich der Formgebungsebene (40) angeordnet sind, und zwar durch jeweilige Träger (51) an Paaren von oberen Ketten (55A, 55B) und Paaren von unteren Ketten (56A, 56B) befestigt.

2. Maschine gemäß Anspruch 1, **dadurch gekennzeichnet, dass** die Trennvorrichtung (35) eine Schubebene (36) für den Transport der ausgewählten Objekte (11) in einer Richtung senkrecht zu den Einspeisungsmitteln (20) aufweist, wobei die Schubebene (36) mit einem Arbeitshub und einem Rückhub versehen ist.

3. Maschine nach Anspruch 2, **dadurch gekennzeichnet, dass** die Trennvorrichtung (35) ein Anschlagelement (37) senkrecht zur Schubebene (36) aufweist, und zwar fest mit der hinteren Seite der Schubebene (36) verbunden.

4. Maschine nach Anspruch 1, **dadurch gekennzeichnet, dass** das mobile Gegenwirkungselement (33) durch einen Motor (34) kontinuierlich entlang eines Förderbandes der Einspeisungsmittel (20) gesteuert wird.

5. Maschine nach Anspruch 1, **dadurch gekennzeichnet, dass** die Auswahlgruppe (30) eine Druckvorrichtung (31) mit Zangen bzw. Greifern aufweist, die stromaufwärts der Trennvorrichtung (35) angeordnet sind, und zwar geeignet zur Unterbrechung oder zur Verlangsamung der Einspeisung der Objekte (11).

6. Maschine nach Anspruch 5, **dadurch gekennzeichnet, dass** die Auswahlgruppe (30) durch ein Steuersystem gemanagt wird, das, sobald die Einspeisung einer vorbestimmten Anzahl von Objekten (11), die eine Reihe 12 bilden, erreicht worden ist, die Betätigung der Druckvorrichtung (31) und den Arbeitshub der Trennvorrichtung (35) steuert und das Öffnen der Druckvorrichtung (31) bezüglich des Rückhubes der Trennvorrichtung (35) vorhersieht bzw. steuert.

7. Maschine nach Anspruch 6, **dadurch gekennzeichnet, dass** die Transfervorrichtung (50) zwei Paare von oberen Ketten (55A; 55B) und zwei Paare von unteren Ketten (56A, 56B) aufweist, wobei jedes Paar von Ketten durch seinen eigenen Motor (155A, 155B, 156A, 156B) unabhängig und programmierbar betätigt wird.

8. Maschine nach Anspruch 7, **dadurch gekennzeichnet, dass** jedes Paar von Ketten (55A; 55B, 56A, 56B) mit zwei Schiebern (51A; 51B, 52A, 52B) ausgerüstet ist.

9. Maschine nach Anspruch 7, **dadurch gekennzeichnet, dass** die zwei Paare von unteren Ketten (56A, 56B) neben einem Ableitungsförderer (57) angeordnet sind, wobei die zwei Ketten, die jedes Paar (56A, 56B) bilden auf gegenüberliegenden Seiten bezüglich des Ableitungsförderers (57) sind, und **dadurch dass** die zwei Paar von oberen Ketten (55A; 55B) an einer Struktur (58) aufgenommen sind, die über dem Ableitungsförderer (57) angeordnet ist und gemäß der Höhe der Packungen in der Höhe einstellbar ist.

10. Maschine nach Anspruch 9, **dadurch gekennzeichnet, dass** die Struktur (58) durch vier höheneinstellbare Teleskopseitenständer (59) getragen wird.

11. Maschine nach Anspruch 1, **dadurch gekennzeichnet, dass** die Träger (54) alternativ auf gegenüberliegenden Seiten der Ketten (55, 56) angeschlossen sein können.

12. Maschine nach Anspruch 1, **dadurch gekennzeichnet, dass** sie sekundäre Einspeisungsmittel (70) zum Einspeisen von Produkten (11, 12, 13, 14) in die Transfervorrichtung (50) auf der zur Ableitungslinie (60) gegenüberliegenden Seite aufweist.

## Revendications

1. Machine pour la constitution de lots d'articles comprenant des moyens d'amenée (20) des articles (11), un groupe de sélection (30) d'au moins une rangée (12) d'articles, agissant dans une direction perpendiculaire à une direction d'amenée desdits articles (11), et au moins une ligne d'évacuation (60) des lots formés, comportant un plan de formation fixe (40) d'un lot (13) disposé en aval dudit groupe de sélection (30) et un dispositif de transfert (50) du lot formé à partir dudit plan de formation (40) vers ladite au moins une ligne d'évacuation (60), dans laquelle ledit groupe de sélection (30) comprend un dispositif séparateur (35) ayant une course variable et programmée pour la sélection d'une quantité variable d'articles (11) fournis en continu en vue de constituer ladite (lesdites) rangée(s) (12) sur ledit plan de formation (40), **caractérisée en ce que** ledit groupe de sélection (30) comprend, de plus, un élément à mouvement contraire (33) de la rangée en formation qui est mobile le long desdits moyens d'amenée (20) et **en ce que** ledit dispositif de transfert (50) du lot (13) à partir dudit plan de formation (40) vers ladite (lesdites) ligne(s) d'évacuation (60) comprend une pluralité de poussoirs supérieurs (51A, 51B) et de rouleaux inférieurs (52A, 52B), chacun étant constitué d'un arbre (53) disposé transversalement par rapport au plan de formation (40), fixé à travers des supports (51) respectivement à des paires de chaînes supérieures (55A, 55B) et à des paires de chaînes inférieures (56A, 56B).

2. Machine selon la revendication 1, **caractérisée en ce que** ledit dispositif séparateur (35) comprend un plan de poussée (36) pour le transport des articles sélectionnés (11) dans une direction perpendiculaire aux dits moyens d'amenée (20), dans laquelle ledit plan de poussée (36) est pourvu d'une course de travail et d'une course de retour.

3. Machine selon la revendication 2, **caractérisée en ce que** ledit dispositif séparateur (35) comprend un élément d'arrêt (37) perpendiculaire audit plan de poussée (36) raccordé de façon fixe sur le côté arrière dudit plan de poussée (36).

4. Machine selon la revendication 1, **caractérisée en ce que** ledit élément mobile à mouvement contraire (33) est commandé par un moteur (34) en continu le long d'une courroie de transporteur desdits moyens d'amenée (20).

5. Machine selon la revendication 1, **caractérisée en ce que** ledit groupe de sélection (30) comprend un dispositif de pression (31) doté de pinces disposées en amont dudit dispositif séparateur (35), appropriées pour interrompre ou ralentir l'amenée des articles (11).

6. Machine selon la revendication 5, **caractérisée en ce que** ledit groupe de sélection (30) est géré par un système de commande qui, une fois que l'amenée d'un nombre prédéterminé d'articles (11) formant une rangée (12) a été réalisée, commande la mise en action dudit dispositif de pression (31) et de la course de travail dudit dispositif séparateur (35) et anticipe l'ouverture dudit dispositif de pression (31) par rapport à la course de retour dudit dispositif séparateur (35).

7. Machine selon la revendication 6, **caractérisée en ce que** ledit dispositif de transfert (50) comporte deux paires de chaînes supérieures (55A, 55B) et deux paires de chaînes inférieures (56A, 56B), dans laquelle chaque paire de chaînes est actionnée par son propre moteur (155A, 155B, 156A, 156B) de façon indépendante et programmable.

8. Machine selon la revendication 7, **caractérisée en ce que** chaque paire de chaînes (55A, 55B, 56A, 56B) est équipée de deux poussoirs (51A, 51B, 52A, 52B).

9. Machine selon la revendication 7, **caractérisée en ce que** les deux dites paires de chaînes inférieures (56A, 56B) sont disposées à côté d'un transporteur d'évacuation (57), les deux dites chaînes formant chaque paire (56A, 56B) se trouvant sur des côtés opposés par rapport audit transporteur d'évacuation (57), et **en ce que** les deux dites paires de chaînes supérieures (55A, 55B) sont logées sur une structure (58) disposée au-dessus du transporteur d'évacuation (7) et réglable en hauteur selon la hauteur des emballages.

10. Machine selon la revendication 9, **caractérisée en ce que** ladite structure (58) est supportée par quatre montants latéraux télescopiques réglables en hauteur (59).

11. Machine selon la revendication 1, **caractérisée en ce que** lesdits supports (54) peuvent être raccordés alternativement sur les côtés opposés desdites chaînes (55, 56).

12. Machine selon la revendication 1, **caractérisée en ce qu'**elle comprend des moyens d'amenée secondaires (70) pour fournir des produits (11, 12, 13, 14) audit dispositif de transfert (50) situées sur le côté opposé à ladite ligne d'évacuation (60).
